# EUROPEAN PATENT SPECIFICATION

(11) **EP 1 933 072 B1**
(45) Date of publication and mention of the grant of the patent: **08.08.2012**
(21) Application number: 07076021.0
(22) Date of filing: 26.11.2007
(51) Int. Cl.: F16L 3/12, F16L 3/10

(54) **Pipe clip**
Rohrklemme
Collier de serrage

(30) Priority: 05.12.2006 NL 1032991
(43) Date of publication of application: 18.06.2008
(73) Proprietor: J. van Walraven Holding B.V., 3641 RK Mijdrecht (NL)
(72) Inventor: van Walraven, Jan, 3641 GP Mijdrecht (NL)
(74) Representative: Houben, Christiaan Hein Willem Frans

(56) References cited:
- EP-A- 1 431 641
- EP-A1- 0 471 989
- DE-A1-102004 051 234
- DE-C1- 4 431 692
- DE-U1- 8 806 714
- DE-U1- 29 714 311

## Description

The invention relates to a pipe clip according to the preamble of claim 1.

This type of pipe clip is known, for example from EP 1 431 641 A2 and DE 34 39 418. The known pipe clips have a clip body with an opening for attaching the pipe clip around the pipe, which opening is delimited by a first and a second end of the clip body. An integrally formed first and second flange are respectively located at the first end and at the second end respectively of the clip body. The second flange has an elongate hole. A nut is attached to the side of the second flange that is facing away from the first end so as to be able to pivot in relation to the clip body. The shank of a tightening screw is inserted into the nut. The first flange is provided with an elongate recess which is open on the side of the flange that is facing away from the clip body. The play required to move the head of the tightening screw along the edge of the first flange is obtained as a result of the fact that the nut is pivotably fastened to the clip body. As a result, the tightening screw can pivot sideways and move along the edge of the flange. Once the head has passed the edge of the first flange, the shank of the tightening screw is received in the open recess of the first flange. In EP 1 431 641 A2, the nut used is a spring nut, allowing the shank of the tightening screw to be pressed deeper through the clip during closing thereof. In DE 34 39 418, the nut used is a plate with a hole which is provided with a screw thread and into which the tightening screw can be screwed.

DE 40 15 404 discloses a different type of pipe clip, wherein the pipe clip has at one end a flange which is provided with a bore provided with a screw thread. The screw thread is screwed into this bore and is fixed in relation to the flange. The pipe clip has at the other end a flange with a recess which is open on the side facing away from the clip body. The recess in the flange has a width which is greater than the diameter of the head of the tightening screw. Pivotably attached to the side of the flange that is facing away from the other flange is a arresting mechanism which has a recess that is open on the side facing away from the clip body. This recess has a width smaller than the diameter of the tightening screw. During closing of the clip, the head presses against the arresting mechanism and ensures the pivoting of the arresting mechanism for the play required to bring the head of the tightening screw along the edge of the arresting mechanism in order subsequently to engage with the head behind the edges of the recess of the arresting mechanism, the shank of the tightening screw being received in the recess. A further pipe clip is disclosed in DE 10 2004 051 234.

The object of the invention is to provide an improved pipe clip.

This object is achieved by a pipe clip according to the preamble of claim 1, characterised in that the first end of the clip body comprises a first flange with a recess for the shank of the tightening element, which recess has dimensions such that the head of the tightening element fits therethrough, and in that a arresting plate is pivotably attached to the side of the first flange that is remote from the second end of the clip body, which arresting plate has a recess which is open on one side for the shank of the tightening element, so that when the head of the tightening element is pressed through the recess in the first flange against the arresting plate during closing of the clip body, the arresting plate is pivoted in such a way that the shank of the tightening element is received in the recess of the arresting plate via the open end.

During closing of the pipe clip, the head of the tightening element is pressed against the pivotable arresting plate. As a result, the tightening element pivots outward but, in addition, the arresting plate pivots upward, allowing the head of the tightening element to move more easily along the edge of the arresting plate and the shank of the tightening element to be received more easily in the recess in the arresting plate. The pipe is often attached under difficult circumstances, for example when a fitter is standing on a ladder, in a plurality of pipe clips suspended in line with one another. During closing, the weight of the pipe can press at least partially against the bottom clip half. In the case of the pipe clip according to the invention, it has been found that, as a result of the combination of the pivotable female fastening element with the tightening element and the pivotable arresting plate, closing is easier than with known pipe clips.

The pipe clip according to the invention allows a tightening element having a shorter shank to be used while still providing the play required in order easily to be able to close the clip. Subsequently, the tightening element can be screwed or optionally pressed further into the female fastening element, which preferably comprises a nut, in order effectively to tighten the clip around the pipe. As a result of the fact that a shorter shank can be used, the tightening element also has to be tightened or pressed to a lesser degree in order to tighten the ends of the clip relative to one another, and this greatly reduces the fitting time.

In a preferred embodiment, the recess in the first flange is formed as a hole through which the head of the tightening element fits, preferably a hole with a wide portion through which the head of the tightening element fits and a narrower portion in which the shank of the tightening element can at least partially be received to allow a pivoting movement of the shank of the tightening element. As a result of the fact that a pivotable arresting plate is attached to the side of the first flange that is facing away from the second end, it is possible to configure the first flange with a hole having a closed contour. As a result, the first flange is significantly stronger than if a flange with an open recess is used.

In addition, the hole in the flange ensures that once the head of the tightening element is moved along the edge of the arresting plate, it cannot become detached again once the shank of the tightening element is received in the recess of the arresting plate. During installing of a pipe, the pipe is often still displaced in relation to the pipe clips which are attached around the pipe by means of the quick-acting closure but have not yet been tightened. It is advantageous that the clips according to the preferred embodiment cannot become detached from the quick-acting closure under the influence of installation activities.

Further embodiments and advantages of the invention will be explained in greater detail in the following description with reference to the drawings, in which:
Fig. 1 is a perspective view of a pipe clip according to the invention during closing of the clip,
Fig. 2 is a perspective view of the pipe clip from Fig. 1 after closing of the clip but before tightening of the tightening screws, and
Fig. 3 is a perspective view of the pipe clip from Fig. 1 with exploded parts.

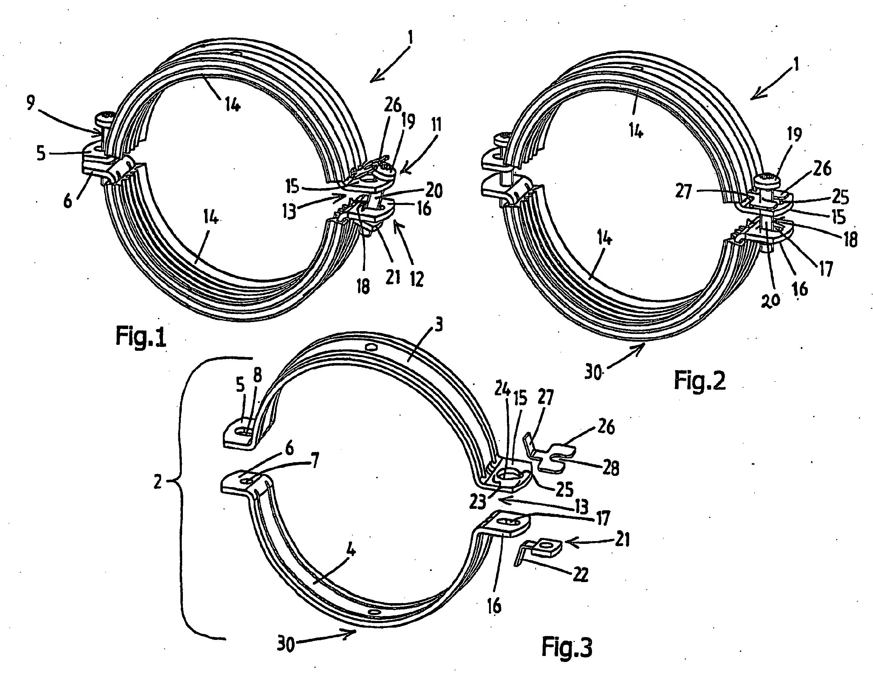

Figs 1 - 3 show a pipe clip 1 with a metal clip body 2 comprising two metal clip halves 3 and 4 respectively. The clip halves 3 and 4 are provided at one end with flanges 5 and 6 respectively. The flange 6 is provided with a hole 7 which is provided with a screw thread and into which a tightening screw 9 can be screwed. The flange 5 is provided with an elongate hole 8 through which the shank of the tightening screw 9 can be inserted. The elongate shape of the hole 8 allows the clip half 3 to be moved in a hinging manner in relation to the other clip half 4 around a hinge axis which is substantially parallel to the axial direction of the clip 1, when the tightening screw 9 has not been fully tightened. Per se, the hole 8 could also be shaped differently, provided that a hinging movement between the clip halves is possible. Per se, the clip halves 3, 4, could also be connected by means of other hinging means.

The clip body 2 has a first end 11 and a second end 12 which delimit an opening 13 for attaching the pipe clip 1 around a conduit. The size of the opening 13 can be increased and decreased respectively by hinging the clip halves 3 and 4 apart from each other and hinging them toward each other respectively.

Reference numeral 30 denotes the location at which a nut or the like is attached to the outside of the clip half 4. This nut, which cannot be seen in the drawing, allows the pipe clip to be suspended from a threaded end.

Figs 1 and 2 show how a vibration-damping lining 14 is attached to the inside of the clip body 2. This lining 14 is preferably made of an elastomer, for example rubber, or another resilient material and has a substantially C-shaped cross section. The lining 14 engages with the flanges of the C shape around the clip halves 3 and 4 of the metal clip body 2.

A first flange 15 is formed integrally at the first end 11 and a second flange 16 is formed integrally at the second end 12.

Formed in the second flange 16 is an elongate hole 17 which is surrounded on all sides by the second flange 16.

For closing the pipe clip 1 and keeping it closed, the pipe clip comprises a tightening element, in particular a tightening screw 18 such as is shown in Figs 1 and 2. The tightening screw 18 has a head 19 and a shank 20 which in the example shown is provided over its entire length with an external screw thread. The shank 20 could also be provided over a portion of its length with a screw thread profile or the like.

A nut 21 is attached to the second end 12, on the side of the second flange 16 that is facing away from the first flange 15, in order to cooperate with the tightening element 18 to keep the pipe clip 1 closed. The nut 21 has a pivot arm 22 which is cliped between the clip half 4 and the vibration-damping lining 14. This allows the nut 21 to perform a pivoting movement in relation to the second flange 16, such as is illustrated in Fig. 1 and Fig. 2. Fig. 1 shows the pivoted position of the nut 21 with the tightening screw 18 inserted therein. Fig. 2 shows the rest position of the nut 21 and the tightening screw 18 inserted therein. In this case, the upper side of the nut 21 preferably rests against the underside of the second flange 16. The resilience of the material of the vibration-damping lining 14 ensures that the nut 21 is moved with the tightening screw 18 when unloaded toward the rest position of Fig. 2.

Shown as a member for fastening the nut to the clip body 2 is in this case a pivot arm 22 which is slid between the metal clip body 2 and the lining 14. However, it is also possible to provide a fastening member which is inserted through an opening, formed for this purpose in proximity to the second flange 16, in the clip body and which is positioned partially between the lining 14 and the clip body 2 in order to obtain a resilient hinging effect. A construction of this type is disclosed, for example, in EP 1 431 641 A2. It should be noted that constructions which derive their resilience not from the flexible lining 14 but rather from other spring means are also conceivable within the scope of the present invention.

The nut 21 used may be a spring nut, wherein the shank 20 of the tightening element 18 can be pressed, instead of screwing, further into the spring nut during closing of the pipe clip 1. A spring nut of this type is known, for example, from EP 1 431 641 A2, wherein the spring nut consists of a plastics material part and a metal part. Other spring nuts which can be used in the pipe clip according to the invention are, however, also conceivable.

It is also possible for the nut 21 used to be a nut body with a hole provided with a screw thread such as is shown, for example, in DE 34 39 418. With a nut of this type, the pipe clip 1 is cliped tight by screwing the tightening screw 18 further into the nut.

Formed in the first flange 15 is a hole 23 with a circular portion 24 having a diameter which is larger than the diameter of the head 19 of the tightening screw 18, thus allowing the head 19 to be inserted through that portion 24 during closing of the pipe clip 1. In the preferred embodiment shown, attached adjoining the round portion 24 of the hole 23 is a narrower portion 25 which, when the tightening screw 18 pivots out, can receive the shank 20 of the tightening screw 18, such as is represented in Fig. 1. In another embodiment (not shown), the hole 23 could also be completely round or, for example, elongate. All that matters is that the head 19 of the tightening element can be inserted through the hole 23.

An arresting plate 26 is attached to the side of the first flange 15 that is facing away from the second flange 16. The arresting plate 26 is provided with an elongate recess 28 which is open on the side facing away from the clip body 2. The recess 28 has a width which is smaller than the diameter of the head 19 of the tightening screw 18 but which is larger that the diameter of the shank 20 of the tightening screw 18. The arresting plate 26 has a pivot arm 27 which is cliped between the metal clip half 3 and the rubber lining 14. This allows the arresting plate 26 to perform a pivoting movement in relation to the first flange 15, such as is illustrated in Fig. 1 and Fig. 2. Per se, a different member for fastening the arresting plate 26 could also be provided in order to fasten the arresting plate 26 to the pipe clip 1. It is, for example, conceivable to use a fastening member such as that shown for the spring nut from EP 1 431 641 A2 also for the arresting plate 26, the fastening member being inserted through an opening, formed for this purpose in proximity to the first flange 15, in the clip body 2 and positioned partially between the lining 14 and the clip body 2 in order to obtain a resilient hinging effect. In this case too, it should be noted that constructions which derive their spring effect not from the flexible lining 14 but rather from other spring means are conceivable within the scope of the present invention.

Fig. 1 shows the pivoted position of the arresting plate 26, the head 19 of the tightening screw 18 being pressed against the side of the arresting plate 26 that faces the first flange 15. Fig. 2 shows the rest position of the arresting plate 26, the head 19 of the tightening screw 18 being positioned above the arresting plate 26 and the shank 20 of the tightening screw 18 being received in the open recess 28. In the drawing, the underside of the arresting plate 26 rests in this case against the upper side of the first flange 15. The resilience of the material of the lining 14 ensures, just as in the case of the nut 21, that the arresting plate 26 is moved toward the rest position of Fig. 2 when unloaded.

During use, the pipe clip 1 according to the invention operates as follows: The pipe clip 1 is hinged open about a hinge axis which is defined by the hinge construction diametrically opposing the opening 13 and extends in the axial direction. As a result, the opening 13 between the ends 11 and 12 of the clip body 2 is enlarged, so that the pipe clip 1 can be attached around a pipe. Subsequently, the clip ends 11 and 12 are moved toward each other in order to close the clip 1. In this case, the head 19 of the tightening screw 18 is inserted through the wide portion 24 of the hole 23 in the first flange 15 and the head 19 of the tightening screw 18 is pressed against the side of the arresting plate 26 that faces the first flange 15. As a result, the arresting plate 26 is pivoted toward a position wherein the arresting plate 26 is positioned obliquely in relation to the flange 15 and the free end of the arresting plate 26 is moved upward (see Fig. 1). The tightening screw 18, the shank 20 of which is inserted into the pivotable nut 21, is moved toward an oblique position shown in Fig. 1. Pressing the clip ends 11 and 12 further toward each other will cause the head 19 of the tightening screw 18 to be guided along the obliquely positioned face of the arresting plate 26 toward the edge of the arresting plate 26 that opposes the pivot arm 27 until this edge has been passed. Subsequently, the cooperation of the pivot arm 27 with the resilience of the lining 14 will cause the arresting plate 26 to recoil in the direction of the rest position (see Fig. 2) and the tightening screw 18 is also recoiled toward a rest position (see Fig. 2) as a result of the cooperation of the pivot arm 22 with the lining 14. In this case, the shank 20 of the tightening screw 18 is brought into the recess 28 of the arresting plate 26. Subsequently, the clip 1 can be further tightened by tightening the tightening screw 18 and possibly also 9 further, wherein the underside of the head 19 comes to rest on the side of the arresting plate 26 that is facing away from the first flange 15.

According to the invention, the two clip ends 11 and 12 are thus provided with a pivotable component. This is in contrast to pipe clips known in the art wherein merely one of the clip ends is provided with a pivotable component. As a result, the invention allows the clip easily to be closed using the quick-acting closure with the tightening screw having a shorter shank than is the case in the known solutions. A shorter shank provides a more attractive appearance, certainly in the case of pipe clips for pipes having small diameters. However, the short shank is advantageous above all because once the clip 1 has been closed using the quick-acting closure, the fitter has to tighten the tightening screw 18 merely over a short shank, thus reducing the fitting time.

## Claims

1. Pipe clip (1) for fastening a pipe to a wall, ceiling or another support, comprising: a clip body (2) with an opening (13) for attaching the pipe clip (1) around the pipe, which opening (13) is delimited by a first and a second end (11, 12) of the clip body (2), a tightening element (18) comprising a head (19) and a shank (20), the head of which tightening element (18) engages with the first end (11) of the clip body (2), wherein the first (11) end of the clip body (2) comprises a first flange (15) with a recess (17) for the shank (20) of the tightening element (18), which recess has dimensions such that the head (19) of the tightening element (18) fits therethrough, and in that an arresting plate (26) is pivotably attached to the side of the first flange (15) that is facing away from the second end (12) of the clip body (2), which arresting plate (26) has a recess (28) which is open on one side for the shank (20) of the tightening element (18), so that when the head (19) of the tightening element (20) is pressed through the recess (28) in the first flange (15) against the arresting plate (26) during closing of the clip body (2), the arresting plate (26) is pivoted in such a way that the shank (20) of the tightening element (18) is received in the recess (28) of the arresting plate (26) via the open end, **characterised in that** the clip comprises a female fastening element (21) which is pivotably connected to the second end (12) of the clip body (2) and wherein the shank (20) of the tightening element (18) is inserted.

2. Pipe clip according to claim 1, wherein a second flange (16) is formed integrally with the second end (12) of the clip body (2), which second flange is provided with a recess (17) for feeding through the shank (20) of the tightening element (18) and wherein the pivotable female fastening element (21) is positioned on the side of the second flange (16) that is facing away from the first flange (15).

3. Pipe clip according to claim 2, wherein the recess (17) in the second flange (16) is formed as an elongate hole to allow a pivoting movement of the tightening element (18) with the pivotable female fastening element (21).

4. Pipe clip according to one or more of the preceding claims, wherein the recess (23) in the first flange (15) is formed as a hole.

5. Pipe clip according to claim 4, wherein the hole (23) has a wide portion (24) through which the head (19) of the tightening element (18) fits and a narrower portion (25) in which the shank (20) of the tightening element (18) can at least partially be received to allow a pivoting movement of the shank of the tightening element.

6. Pipe clip according to one or more of the preceding claims, wherein the arresting plate (26) is resiliently connected to the clip body (2).

7. Pipe clip according to one or more of the preceding claims, wherein the pivotable female fastening element (21) is resiliently connected to the clip body (2) at the second end (12).

8. Pipe clip according to one or more of the preceding claims, wherein the female fastening element (21) comprises a nut at the second end (12) of the clip body (2).

9. Pipe clip according to claim 8, wherein the nut (21) is a spring nut which is configured in such a way that the tightening element (18) can be pressed further into the spring nut during closing of the pipe clip (1).

## Patentansprüche

1. Rohrschelle (1) zur Befestigung eines Rohres an einer Wand, Decke oder einem anderen Untergrund, enthaltend: einen Schellenkörper (2) mit einer Öffnung (13) zur Befestigung der Rohrschelle (1) um das Rohr, welche Öffnung (13) durch ein erstes und ein zweites Ende (11, 12) des Schellenkörpers (2) begrenzt ist, ein Spannelement (18), welches einen Kopf (19) und einen Schaft (20) aufweist, wobei der Kopf dieses Spannelements (18) mit dem ersten Ende (11) des Schellenkörpers (2) in Eingriff steht, wobei das erste (11) Ende des Schellenkörpers (2) einen ersten Flansch (15) mit einer Öffnung (17) für den Schaft (20) des Spannelements (18) aufweist, welche Öffnung so dimensioniert ist, dass der Kopf (19) des Spannelements (18) hindurch passt, und wobei eine Halteplatte (26) an der Seite des ersten Flansches (15), die von dem zweiten Ende (12) des Schellenkörpers (2) weg weist, schwenkbar angebracht ist, welche Halteplatte (26) eine Ausnehmung (28) hat, die auf einer Seite für den Schaft (20) des Spannelements (18) offen ist, so dass dann, wenn der Kopf (19) des Spannelements (18) während des Schließens des Schellenkörpers (2) durch die Öffnung (28) in dem ersten Flansch (15) gegen die Halteplatte (26) gedrückt wird, die Halteplatte (26) dergestalt verschwenkt wird, dass der Schaft (20) des Spannelements (18) durch das offene Ende in der Ausnehmung (28) der Halteplatte (26) aufgenommen wird, **dadurch gekennzeichnet, dass** die Schelle ein weibliches Befestigungselement (21) aufweist, welches schwenkbar mit dem zweiten Ende (12) des Schellenkörpers (2) verbunden ist und worin der Schaft (20) des Spannelements (18) eingeführt ist.

2. Rohrschelle nach Anspruch 1, bei welcher ein zweiter Flansch (16) einstückig mit dem zweiten Ende (12) des Schellenkörpers (2) gebildet ist, welcher zweite Flansch mit einer Öffnung (17) zur Durchführung des Schafts (20) des Spannelements (18) versehen ist, und bei welcher das schwenkbare weibliche Befestigungselement (21) auf der Seite des zweiten Flansches (16) positioniert ist, welche von dem ersten Flansch (15) abgewandt ist.

3. Rohrschelle nach Anspruch 2, bei welcher die Öffnung (17) in dem zweiten Flansch (16) als ein Langloch gebildet ist, um eine Schwenkbewegung des Spannelements (18) mit dem schwenkbaren weiblichen Befestigungselement (21) zu erlauben.

4. Rohrschelle nach einem oder mehreren der vorstehenden Ansprüche, bei welcher die Öffnung (23) in dem ersten Flansch (15) als Loch ausgebildet ist.

5. Rohrschelle nach Anspruch 4, bei welcher das Loch (23) einen breiten Abschnitt (24) hat, durch welchen der Kopf (19) des Spannelements (18) passt, und einen schmäleren Abschnitt (25), in welchem der Schaft (20) des Spannelements (18) zumindest teilweise aufgenommen werden kann, um eine Schwenkbewegung des Schafts des Spannelements zu erlauben.

6. Rohrschelle nach einem oder mehreren der vorstehenden Ansprüche, bei welcher die Halteplatte (26) mit dem Schellenkörper (2) elastisch verbunden ist.

7. Rohrschelle nach einem oder mehreren der vorstehenden Ansprüche, bei welcher das schwenkbare weibliche Befestigungselement (21) mit dem Schellenkörper (2) an dem zweiten Ende (12) elastisch verbunden ist.

8. Rohrschelle nach einem oder mehreren der vorstehenden Ansprüche, bei welcher das weibliche Befestigungselement (21) eine Mutter am zweiten Ende (12) des Schellenkörpers (2) umfasst.

9. Rohrschelle nach Anspruch 8, bei welcher die Mutter (21) eine Federmutter ist, die dergestalt konfiguriert ist, dass das Spannelement (18) während des Schließens der Rohrschelle (1) weiter in die Federmutter gepresst werden kann.

## Revendications

1. Attache pour tuyau (1) pour fixer un tuyau à une paroi, un plafond ou à un autre support, comprenant : un corps d'attache (2) doté d'une ouverture (13) permettant d'attacher l'attache pour tuyau (1) autour du tuyau, laquelle ouverture (13) est délimitée par des première et seconde extrémités (11, 12) du corps d'attache (2), un élément de serrage (18) comprenant une tête (19) et une tige (20), la tête duquel élément de serrage (18) engage avec la première extrémité (11) du corps d'attache (2), dans laquelle la première extrémité (11) du corps d'attache (2) comprend un premier rebord (15) pourvu d'un évidement (17) destiné à la tige (20) de l'élément de serrage (18), lequel évidement a des dimensions telles que la tête (19) de l'élément de serrage (18) le traverse de manière ajustée, et dans laquelle une plaque d'arrêt (26) est attachée de manière pivotante au côté du premier rebord (15) qui fait face à distance de la seconde extrémité (12) du corps d'attache (2), laquelle plaque d'arrêt (26) comporte un évidement (28) qui est ouvert sur un côté pour le passage de la tige (20) de l'élément de serrage (18), de sorte que, lorsque l'on presse la tête (19) de l'élément de serrage (20) à travers l'évidement (28) réalisé dans le premier rebord (15) contre la plaque d'arrêt (26) pendant la fermeture du corps d'attache (2), la plaque d'arrêt (26) pivote de manière que la tige (20) de l'élément de serrage (18) est reçue dans l'évidement (28) de la plaque d'arrêt (26) via l'extrémité ouverte, **caractérisée en ce que** l'attache comprend un élément de fixation femelle (21) qui est lié de manière pivotante à la seconde extrémité (12) du corps d'attache (2), et dans lequel la tige (20) de l'élément de serrage (18) est introduite.

2. Attache pour tuyau selon la revendication 1, dans laquelle un second rebord (16) est formé d'une seule pièce à la seconde extrémité (12) du corps d'attache (2), lequel second rebord est pourvu d'un évidement (17) permettant la traversée de la tige (20) de l'élément de serrage (18), et dans laquelle l'élément de fixation femelle pivotant (21) est disposé sur le côté du second rebord (16) qui fait face à distance du premier rebord (15).

3. Attache pour tuyau selon la revendication 2, dans laquelle l'évidement (17), réalisé dans le second rebord (16), est formé comme un trou allongé dans le but de permettre un mouvement pivotant de l'élément de serrage (18) avec l'élément de fixation femelle pivotant (21).

4. Attache pour tuyau selon l'une ou plusieurs des revendications précédentes, dans laquelle l'évidement (23), réalisé dans le premier rebord (15), est formé comme un trou.

5. Attache pour tuyau selon la revendication 4, dans laquelle le trou (23) comporte une partie large (24) dans laquelle s'ajuste la tête (19) de l'élément de serrage (18), et une partie plus étroite (25) dans laquelle la tige (20) de l'élément de serrage (18) peut être reçue au moins partiellement dans le but de permettre un mouvement pivotant de la tige de l'élément de serrage.

6. Attache pour tuyau selon l'une ou plusieurs des revendications précédentes, dans laquelle la plaque d'arrêt (26) est liée de manière élastique au corps d'attache (2).

7. Attache pour tuyau selon l'une ou plusieurs des revendications précédentes, dans laquelle l'élément de fixation femelle pivotant (21) est lié de manière élastique au corps d'attache (2) au niveau de la seconde extrémité (12).

8. Attache pour tuyau selon l'une ou plusieurs des revendications précédentes, dans laquelle l'élément de fixation femelle (21) comprend un écrou au niveau de la seconde extrémité (12) du corps d'attache (2).

9. Attache pour tuyau selon la revendication 8, dans laquelle l'écrou (21) est un écrou à ressort qui est configuré de manière que l'élément de serrage (18) peut être pressé plus avant dans l'écrou à ressort pendant la fermeture de l'attache pour tuyau (1).
